**Europäisches Patentamt**

**European Patent Office**

**Office européen des brevets**

(19)

(11) Numéro de publication: **0 196 713**
**B1**

---

(12)

# FASCICULE DE BREVET EUROPEEN

(45) Date de publication du fascicule du brevet:
**20.06.90**

(51) Int. Cl.⁵: **G01S 15/02**, G01S 7/52,
G01S 7/62

(21) Numéro de dépôt: **86200474.4**

(22) Date de dépôt: **21.03.86**

---

(54) Procédé et appareil d'exploration de milieux par échographie ultrasonore.

---

(30) Priorité: **29.03.85 FR 8504821**

(43) Date de publication de la demande:
**08.10.86 Bulletin 86/41**

(45) Mention de la délivrance du brevet:
**20.06.90 Bulletin 90/25**

(84) Etats contractants désignés:
**DE FR GB**

(56) Documents cités:
**EP-A- 0 100 234**
**US-A- 4 470 303**

**IEEE 1983 ULTRASONICS SYMPOSIUM PROCEEDINS,**
éditeur B.R. McAvoy, IEEE Group on Sonics &
Ultrasonics, 31 octobre, 1,2 novembre 1983, Atlanta,
Georgia, pages 835-840, New York, US; J.L.
BERNATETS et al.: "Estimation of frequency dependent
attenuation in biological tissue by a time-frequency
representation of the echographic a-lines" 000
**IEEE TRANSACTIONS ON BIOMEDICAL ENGINEERING,**
vol. BME-30, no. 8, août 1983, pages 431-437, IEEE, New
York, US; K.J. PARKER et al.: "Measurement of
ultrasonic attenuation within regions selected from
B-scan images"
**IEEE TRANSACTIONS ON BIOMEDICAL ENGINEERING,**

(73) Titulaire: **LABORATOIRES D'ELECTRONIQUE PHILIPS,**
**3, Avenue Descartes, F-94450 Limeli-Brévannes(FR)**
(84) Etats contractants désignés: **FR**

(73) Titulaire: **N.V. Philips' Gloellampenfabrieken,**
**Groenewoudseweg 1, NL-5621 BA Eindhoven(NL)**
(84) Etats contractants désignés: **DE GB**

(72) Inventeur: **Nicolas, Jean-Marie, Société Civile**
**S.P.I.D. 209 rue de l'Université, F-75007 Paris(FR)**

(74) Mandataire: **Landousy, Christian et al, Société Civile**
**S.P.I.D. 209, Rue de l'Université, F-75007 Paris(FR)**

(56) Documents cités: (suite)
vol. BME-30, no. 6, juin 1983, pages 320-326, IEEE, New
York, US; M.O'DONNELL: "Effects of diffraction on
measurements of the frequency-dependent ultrasonic
attenuation"
**IBM JOURNAL OF RESEARCH AND DEVELOPMENT,**
vol. 26, no. 6, novembre 1982, pages 746-748, Armonk,
New York, US; E.J. FARRELL: "Backscatter and
attenuation imaging from ultrasnic scanning in
medicine"

---

## Description

La présente invention concerne un procédé d'exploration de milieux par échographie ultrasonore comprenant une émission répétée de signaux ultrasonores par au moins un transducteur ultrasonore et la réception des échos ultrasonores correspondant aux obstacles rencontrés dans leur direction de propagation par les signaux émis, ledit procédé comprenant les opérations suivantes:

(a) mémorisation des échos d'une ligne échographique;
(b) pour une fenêtre temporelle correspondant à un temps de vol $\tau$ déterminé, détermination du spectre de puissance avec correction de l'effet de la diffraction et de l'atténuation.

L'invention concerne également un appareil pour la mise en œuvre d'un tel procédé. Un tel appareil est utilisable par exemple dans le domaine du contrôle non destructif des matériaux et pour l'exploration de tissus biologiques.

Une image échographique ultrasonore traditionnelle est obtenue par détection de l'enveloppe des échos engendrés dans les tissus par un faisceau d'ultrasons. Les échos les plus importants prenant naissance aux frontières des organes, ces images montrent principalement les contours de ces derniers. Toutes les informations liées à la phase, et donc à la fréquence, du signal sont alors perdues. Or ces informations peuvent être reliées à de bons indicateurs de certaines pathologies diffuses très difficiles à diagnostiquer par d'autres moyens.

La communication "Estimation of frequency dependant attenuation in biological tissue by a time-frequency representation of the echographic A-lines" effectuée par J. L. Bernatets et F. Hottier lors du Symposium sur les ultrasons tenu du 31 octobre au 2 novembre 1983 à Atlanta, Géorgie, Etats-Unis, propose une méthode d'analyse du signal échographique par l'intermédiaire de la détermination du spectre de puissance S(f) dudit signal (f étant la fréquence), spectre dont l'expression mathématique fait notamment intervenir la fonction de diffusion du milieu examiné. Cependant, compte tenu des hypothèses faites, cette modélisation permet seulement de connaître l'évolution de l'atténuation en fonction de la fréquence.

Un but de l'invention est de proposer un procédé d'examen de milieux par échographie ultrasonore dans lequel, moyennant des hypothèses différentes, on s'attache à déterminer la dépendance en fréquence d'un autre paramètre qui peut être un bon indicateur pathologique, à savoir la fonction de diffusion du milieu examiné.

A cet effet, le procédé selon l'invention est caractérisé en ce qu'il est destiné à déterminer la dépendance en fréquence de la fonction de diffusion du milieu exploré $U(f) = af^b$, a et b étant des coefficients, et la fonction de diffusion étant liée au spectre de puissance $S_W(\tau, f)$ des échos reçus dans une fenêtre temporelle W, correspondant à un temps de vol $\tau$, par la relation

$$S_W(\tau, f) = |G(f)|^2 \cdot |U(f)|^2 \cdot D(\tau, f) \cdot e^{-2\alpha(f)c\tau}$$

où $|G(f)|^2$ dépend du signal d'émission et du transducteur, $D(\tau, f)$ traduit l'effet de diffraction, et $\alpha(f)$ et c correspondent respectivement à l'atténuation et à la vitesse des signaux ultrasonores dans le milieux exploré, et en ce qu'il comprend également les opérations suivantes:

(c) mémorisation et/ou représentation de la fonction d diffusion du milieu exploré en fonction de la fréquence, comprenant d'une part la conversion sous forme logarithmique d'un signal proportionnel au carré de la fonction de diffusion $|U(f)|$, défini à partir dudit spectre de puissance corrigé, et d'autre part la mémorisation et/ou la représentation en coordonnées logarithmiques dudit signal sur un dispositif de visualisation;
(d) renouvellement des opérations (b), (c), pour d'autres temps de vol sur une ligne échographique déterminée, puis des opérations (a), (b), (c) pour d'autres lignes échographiques.

Par la mise en œuvre de ce procédé, on parvient à évaluer de façon quantitative la fonction de diffusion du milieu exploré, ce qui permet une caractérisation de ce milieu et la connaissance de son état pathologique.

Les demandes de brevet EP-A 0 196 714 et EP-A 0 197 582 déposées le même jour par les sociétés demanderesses décrivent également, l'une et l'autre, un procédé de ce type, à cette différence près que les traitements opérés et les circuits correspondants sont de nature distincte. En effet, dans la première de ces demandes, on prévoit d'utiliser non pas directement l'expression du spectre de puissance, comme dans la présente demande, mais le rapport de tels spectres, ce qui conduit à des simplifications d'ordre mathématique avantageuses. Dans la seconde de ces demandes, on propose, pour la mise en évidence de la dépendance en fréquence de la fonction de diffusion, une troisième solution procédant par bandes de fréquence adjacentes et par référence à un fantôme de même atténuation que le milieu exploré.

Un autre but de l'invention est de proposer un appareil d'exploration de milieux par échographie ultrasonore permettant la mise en œuvre du procédé selon l'invention.

Ledit appareil est à cet effet caractérisé en ce que, pour déterminer la dépendance en fréquence de la fonction de diffusion du milieu exploré $U(f) = af^b$, a et b étant des coefficients, et la fonction de diffusion étant liée au spectre de puissance $S_W(\tau, f)$ des échos reçus dans une fenêtre temporelle W, correspondant à un temps de vol $\tau$, par la relation

$$S_W(\tau, f) = |G(f)|^2 \cdot |U(f)|^2 \cdot D(\tau, f) \cdot e^{-2\alpha(f)c\tau}$$

où $|G(f)|^2$ dépend du signal d'émission et du transducteur, $D(\tau, f)$ traduit l'effet de diffraction, et $\alpha(f)$ et c correspondent respectivement à l'atténuation et à la vitesse des signaux ultrasonores dans le milieux exploré, ledit étage de réception comprend également:

(C) un étage de mémorisation et/ou de représentation de la fonction de diffusion du milieu exploré, composé d'un amplificateur logarithmique relié à la sortie de l'étage de détermination de spectre, et d'un circuit de traitement arithmétique qui permet la mémorisation, ou la représentation sur un dispositif de visualisation, de la fonction de diffusion du milieu exploré en fonction de la fréquence, l'étage de correction de diffraction étant suivi d'un étage de correction d'atténuation qui reçoit d'une mémoire un signal de correction d'atténuation.

La demande de brevet européen EP 0 100 234 décrit un procédé et un appareil prévoyant une opération de mémorisation des échos ultrasonores associés à une ligne d'exploration échographique et une opération de détermination de spectre de puissance pour une profondeur d'exploration déterminée. Mais les traitements qui suivent ces opérations initiales sont ensuite distincts, dans la mesure où le document cité s'attache non pas à la détermination de la fonction de diffusion — caractérisant l'aptitude corpusculaire du milieu exploré à renvoyer des ondes ultrasonores de façon omnidirectionnelle —, mais à l'étude de la fonction de transfert R(f) dudit milieu.

Les particularités et avantages de l'invention apparaîtront de façon plus détaillée dans la description qui suit et dans les dessins annexés donnés à titre d'exemples non limitatifs et dans lesquels:

– la figure 1 montre un exemple de réalisation de l'appareil selon l'invention;
– la figure 2 est une courbe qui met en évidence les résultats des opérations effectuées dans le cadre de l'invention par le circuit de traitement arithmétique de l'appareil de la figure 1.

L'analyse, évoquée plus haut, de la dépendance en fréquence de la fonction de diffusion du milieu examiné est réalisée par l'intermédiaire d'une comparaison de spectres moyens de puissance. On sait que l'expression d'un spectre moyen de puissance peut s'écrire, pour une fenêtre temporelle W à l'instant $\tau$:

$$S_W(\tau, f) = |G(f)|^2 \cdot |U(f)|^2 \cdot D(\tau, f) \cdot e^{-2\alpha(f)c\tau} \quad (1)$$

Dans cette expression, $|G(f)|^2$ ne dépend que du signal d'émission et des caractéristiques acoustiques et électriques du transducteur, $D(\tau, f)$ traduit l'effet de filtrage dû à la diffraction, $\alpha(f)$ et c expriment respectivement l'atténuation et la vitesse des ondes ultrasonores dans le milieu examiné, et U(f) est la fonction de diffusion du milieu. De l'expression (1), on déduit:

$$U(f)^2 = S_W(\tau,f)/(|G(f)|^2 \cdot D(\tau,f) \cdot e^{-2\alpha(f)c\tau}) \quad (2)$$

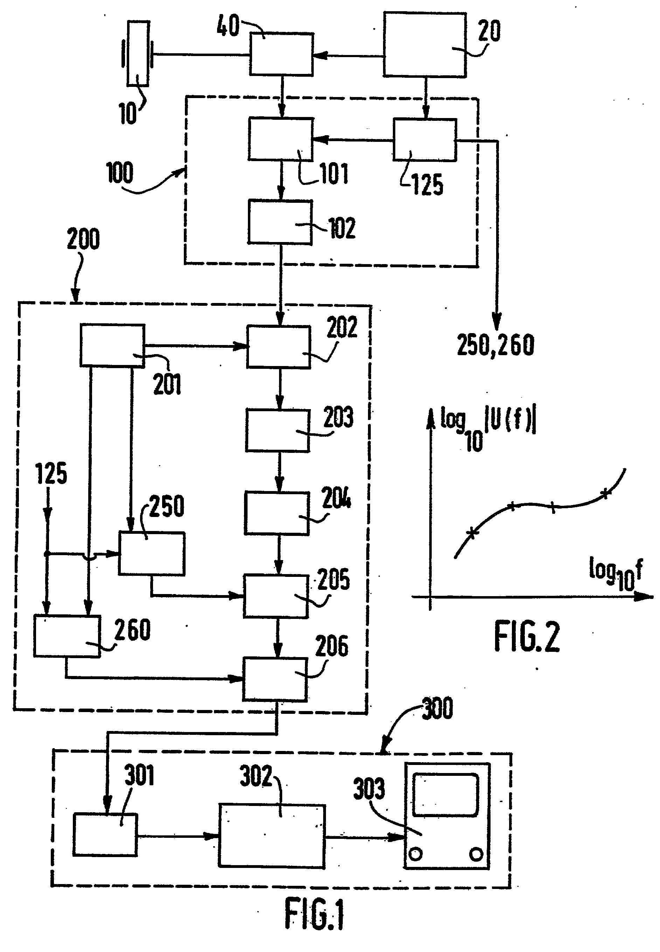

L'appareil proposé conformément à l'invention permet d'obtenir une détermination de $|U(f)|^2$, puis d'en déduire la dépendance en fréquence de la fonction de diffusion. Cet appareil, représenté sur la figure 1, est dans le cas présent équipé d'une sonde unique constituant le support d'un transducteur ultrasonore 10 et permettant d'obtenir des échographies de type A de milieux tels que des tissus biologiques. Il va sans dire que l'invention est applicable exactement de la même manière si l'on explore non plus seulement une ligne, mais toute une section plane des tissus soit à l'aide d'une sonde à déplacement manuel ou à déplacement mécanique angulaire dit sectoriel, associée à un écran de visualisation du type radar, soit à l'aide d'une barrette linéaire de p transducteurs ultrasonores définissant un même nombre p de directions d'exploration parallèles dans le milieu à examiner et associée à un circuit de commutation du dispositif de traitement d'échos successivement sur chaque transducteur ou groupe de transducteurs en fonctionnement, soit encore à l'aide d'une barrette de transducteurs dite à balayage électronique sectoriel, également associée à un circuit de commutation du dispositif de traitement ainsi qu'à un réseau de lignes à retard ou de déphaseurs.

Le transducteur 10 est associé d'une part à un étage d'émission 20 destiné à permettre une émission répétée de signaux ultrasonores par le transducteur dans une direction d'exploration quelconque à travers les tissus à examiner et d'autre part à un étage de réception destiné à assurer le traitement des échos ultrasonores reçus par le transducteur et qui correspondent aux obstacles rencontrés dans leurs directions de propagation par les signaux émis. Ces obstacles peuvent être repérés sur les échogrammes par les échos de grande amplitude qui matérialisent les frontières entre tissus dont on cherche à déterminer les coefficients différentiels d'atténuation ultrasonore. Cette association est en général réalisée par l'intermédiaire d'un circuit de sélection alternative 40 assurant la liaison exclusive soit de l'étage d'émission, soit de l'étage de réception, avec le transducteur, un tel circuit de sélection étant mentionné par exemple dans le brevet des Etats-Unis d'Amérique N° 4 139 834. Ce circuit 40 évite la dégradation des signaux émis sous l'influence des signaux de réception ou, alternativement, l'aveuglement des signaux reçus par les signaux d'émission.

Dans le mode de réalisation décrit, l'étage de réception comprend en série d'une part un circuit 100 de mémorisation d'une ligne échographique (de type A) d'autre part un circuit de traitement 200, et enfin un circuit 300 de détermination de la dépendance en fréquence. Le circuit 100 comprend successivement un

3

convertisseur analogique-numérique 101, piloté par un circuit d'horloge 125 lui-même commandé par l'horloge de l'étage d'émission, et une mémoire numérique 102. Le circuit 200 comprend successivement un circuit de sélection temporelle 202, un circuit 203 de calcul de transformée de Fourier, un circuit 204 de calcul du module au carré pour le calcul du spectre de puissance, un circuit de correction de diffraction, et un circuit de correction de l'atténuation. Le circuit 202 est ici un circuit de multiplication de la sortie de la mémoire 102 par un signal en forme de créneau constituant une fenêtre temporelle dont la position est déterminée par un circuit 201 de sélection de temps de vol, le temps de vol ainsi sélectionné correspondant par exemple au flanc avant du signal en forme de créneau. On notera que la sélection de temps de vol équivaut à une sélection de profondeur d'observation dans le milieu exploré.

Le circuit de correction de diffraction est un circuit de division 205 qui reçoit sur une première entrée le signal de sortie du circuit 204 de calcul du module au carré et sur une deuxième entrée un signal de division dit de correction de diffraction délivré par une mémoire 250. La mémoire 250 est commandée par le circuit d'horloge 125 lui-même déclenché par l'horloge de l'étage d'émission, et est reliée également à la sortie du circuit 201 de sélection de temps de vol. Cette mémoire 250 est soit une mémoire morte programmable, de type PROM par exemple, soit une mémoire à accès aléatoire, et est chargée de la façon suivante, que le transducteur soit de type focalisant ou non. On opère la sélection d'une tranche du milieu à examiner située à l'avant de ce milieu par rapport à l'appareil et à une distance Z sur l'axe principal de propagation, le milieu intermédiaire entre cette tranche et l'appareil étant à faible atténuation, de l'eau par exemple. A signal d'émission constant, on détermine dans cette position le spectre énergétique du signal échographique, puis on reprend cette détermination à la même distance Z mais pour d'autres positions obtenues par déplacements perpendiculaires à l'axe principal de propagation, afin d'obtenir un spectre énergétique moyen, en effectuant par exemple une moyenne de 100 spectres autour de la même position. On répète ensuite la même détermination de spectre énergétique moyen à d'autres distances Z entre l'appareil et le milieu à examiner mais en considérant toujours dans ce milieu la même trance grâce à l'action d'un circuit de sélection temporelle définissant une fenêtre de temps. On calcule alors, pour toutes ces positions successives le long de l'axe Z, les valeurs de correction de diffraction, les mesures effectuées ayant en effet éliminé toute influence de l'atténuation par le choix approprié du milieu intermédiaire, et ces valeurs sont introduites dans la mémoire 250. Dans le cas d'un transducteur non focalisant, la détermination des valeurs de correction peut aussi être effectuée sans faire appel à une tranche du milieu à examiner, en utilisant simplement la surface réflectrice, par exemple plane ou sphérique, d'un corps de référence.

Le circuit de correction de l'atténuation est un circuit de multiplication 206 qui reçoit sur une première entrée la sortie du circuit de multiplication 205 et sur une deuxième entrée un signal de correction d'atténuation dont l'expression est de la forme $e^{+2\alpha(f)c\tau}$. Les valeurs de ce signal de correction d'atténuation sont délivrées par une mémoire 260 commandée par le circuit d'horloge 125 et également par le circuit 201 de sélection de temps de vol. Cette mémoire est, comme ci-dessus, soit une mémoire morte de type PROM, soit une mémoire à accès aléatoire.

La sortie du circuit de multiplication 206 délivre un signal qui est proportionnel à $|U(f)|^2$, et qui est fourni à l'entrée du circuit 300 de détermination de la dépendance en fréquence. Comme, par hypothèse, la fonction de diffusion peut être exprimée sous la forme polynômiale $U(f) = af^b$, le circuit 300 comprend les circuits suivants: un amplificateur logarithmique 301, qui délivre un signal proportionnel à $2b \cdot \log_{10}f$, et un circuit de traitement arithmétique 302 qui permet la mémorisation et/ou la représentation (voir la figure 2, en coordonnées logarithmiques) de la dépendance en fréquence de la fonction de diffusion, la représentation étant alors opérée sur un dispositif de visualisation 303.

Ces calculs sont repris pour chaque profondeur souhaitée, ladite profondeur d'observation étant donc fixée par le circuit 201, avec un pas d'autant plus petit qu'une plus grande finesse d'image ou d'analyse est demandée. La présence d'un dispositif classique de balayage mécanique, ou électronique, ou un simple déplacement manuel, permet ensuite d'étudier de façon similaire d'autres lignes échographiques et donc d'obtenir des images de type B. Il est par ailleurs possible dans tous les cas de choisir des mémorisations et/ou représentations soit en fonction de la fréquence pour une profondeur déterminée, soit en fonction de la profondeur pour une fréquence déterminée.

## Revendications

1. Procédé d'exploration de milieux par échographie ultrasonore comprenant une émission répétée de signaux ultrasonores par au moins un transducteur ultrasonore et la réception des échos ultrasonores correspondant aux obstacles rencontrés dans leur direction de propagation par les signaux émis, ledit procédé comprenant les opérations suivantes:

(a) mémorisation des échos d'une ligne échographique;

(b) pour une fenêtre temporelle correspondant à un temps de vol $\tau$ déterminé, détermination du spectre de puissance avec correction de l'effet de la diffraction et de l'atténuation;

caractérisé en ce qu'il est destiné à déterminer la dépendance en fréquence de la fonction de diffusion du milieu exploré $U(f) = af^b$, a et b étant des coefficients, et la fonction de diffusion étant liée au spectre

4

de puissance Sw(τ, f) des échos reçus dans une fenêtre temporelle W, correspondant à un temps de vol τ, par la relation

Sw (τ, f) = | G(f) | ² • | U(f) | ² • D(τ, f) • e⁻²ᵅ⁽ᶠ⁾ᶜᵗ

où | G(f) | ² dépend du signal d'émission et du transducteur, D(τ, f) traduit l'effet de diffraction, et α(f) et c correspondent respectivement à l'atténuation et à la vitesse des signaux ultrasonores dans le milieu exploré, et en ce qu'il comprend également les opérations suivantes:

(c) mémorisation et/ou représentation de la fonction de diffusion du milieu exploré en fonction de la fréquence, comprenant d'une part la conversion sous forme logarithmique d'un signal proportionnel au carré de la fonction de diffusion | U(f) |, défini à partir dudit spectre de puissance corrigé, et d'autre part la mémorisation et/ou la représentation en coordonnées logarithmiques dudit signal sur un dispositif de visualisation;

d) renouvellement des opérations (b), (c), pour d'autres temps de vol sur une ligne échographique déterminée, puis des opérations (a), (b), (c) pour d'autres lignes échographiques.

2. Appareil d'exploration de milieux par échographie ultrasonore pour la mise en œuvre du procédé se-lon la revendication 1, comportant au moins un transducteur ultrasonore associé à un étage d'émission pour assurer une émission répétée de signaux ultrasonores et à un étage de réception pour assurer la réception des échos ultrasonores correspondant aux obstacles rencontrés dans leur direction de propagation par les signaux émis, ledit étage de réception comprenant:

(A) un étage (100) de mémorisation des échos d'une ligne échographique, composé d'un convertisseur analogique-numérique (101) et d'une mémoire numérique (102);

(B) un étage (200) de détermination de spectre de puissance, composé successivement d'un circuit (201) de sélection de fenêtre temporelle associée à un temps de vol τ, d'un circuit (202) de multiplication de la sortie de ce circuit de sélection par celle de l'étage (100) de mémorisation des échos d'une ligne échographique, d'un circuit (203) de calcul de transformée de Fourier, d'un circuit (204) de calcul du module au carré, et d'un étage de correction de diffraction (205);·

caractérisé en ce que, pour déterminer la dépendance en fréquence de la fonction de diffusion du milieu exploré U(f) = af^b, a et b étant des coefficients, et la fonction de diffusion étant liée au speotre de puis-sance Sw(τ, f), des échos reçus dans une fenêtre temporelle W, correspondant à un temps de vol τ, par la relation

Sw (τ, f) = | G(f) | ² • | U(f) | ² • D(τ, f) • e⁻²ᵅ⁽ᶠ⁾ᶜᵗ

où | G(f) | ² dépend du signal d'émission et du transducteur, D(τ, f) traduit l'effet de diffraction, et α(f) et c correspondent respectivement à l'atténuation et à la vitesse des signaux ultrasonores dans le milieu exploré, ledit étage de réception comprend également:

(C) un étage (300) de mémorisation et/ou de représentation de la fonction de diffusion du milieu exploré, composé d'un amplificateur logarithmique (301) relié à la sortie de l'étage (200) de détermination de spectre, et d'un circuit (302) de traitement arithmétique qui permet la mémorisation, ou la représentation sur un dispositif de visualisation (303), de la fonction de diffusion du milieu exploré en fonction de la fréquence, l'étage de correction de diffraction (205) étant suivi d'un étage de correction d'atténuation (206) qui reçoit d'une mémoire (260) un signal de correction d'atténuation.

**Claims**

1. A method of investigating media by ultrasonic echography, involving a repeated transmission of ultrasonic signals by means of at least one ultrasonic transducer and the reception of the ultrasonic echoes which correspond to the obstacles encountered by the transmitted signals in their propagation direction, which method includes the following operations:

(a) storing the echoes of an echographic line;

(b) determining, for a time slot corresponding to a given time of flight τ, the power spectrum with correction for the effect of diffraction and attenuation;

characterized in that it is intended to determine the frequency-dependency of the scatter function U(f) = af^b of the medium investigated, where a and b are coefficients and the scatter function is linked to the power spectrum Sw(τ, f) of the echoes received in the time slot W, corresponding to a time of flight τ, by the relation

Sw (τ, f) = | G(f) | ² • | U(f) | ² • D(τ, f) • e⁻²ᵅ⁽ᶠ⁾ᶜᵗ,

where | G(f) | ²depends on the transmitted signal and the transducer, D(τ, f) represents the diffraction effect, and α(f) and c correspond to the attenuation and to the speed of the ultrasonic signals, respectively, in the medium investigated, and in that it also comprises the following operations:

(c) storage and/or display of the scatter function of the medium investigated as a function of the frequency, comprising on the one hand the logarithmic conversion of a signal proportional to the square of the scatter function | U(f) |, defined on the basis of said corrected power spectrum, and on the other hand the storage and/or display logarithmic coordinates of said signal on a display device;

(d) repeating the operations (b), (c) for other times of flight on a given echographic line, followed by the operations (a), (b), (c) for other echographic lines.

2. A device for investigating media by ultrasonic echography by means of the method claimed in Claim 1, comprising at least one ultrasonic transducer which is connected to a transmitter stage for a repeated transmission of ultrasonic signals and to a receiver stage for the reception of ultrasonic echoes corresponding to the obstacles encountered by the transmitted signals in their propagation direction, which receiver stage comprises:

(A) a stage (100) for storing the echoes of an echographic line, comprising an analog-to-digital converter (101) and a digital memory (102);

(B) a stage (200) for determining the power spectrum, successively comprising a circuit (201) for selecting a time slot associated with a time of flight $\tau$, a circuit (202) for multiplying the output signal of this selection circuit by that of the stage (100) for storing the echoes of an echographic line, a circuit (203) for calculating Fourier transforms, a circuit (204) for calculating the square of the modulus, and a diffraction correction stage (205);

characterized in that for the determination of the frequency-dependency of the scatter function U(f) = $af^b$ of the medium investigated, where a and b are coefficients and the scatter function is linked to the power spectrum $S_W(\tau, f)$ of the echoes received in a time slot W, corresponding to a time of flight $\tau$, by the relation

$$S_W(\tau, f) = |\,G(f)\,|^2 \cdot |\,U(f)\,|^2 \cdot D(\tau, f) \cdot e^{-2\alpha(f)c\tau},$$

where $|\,G(f)\,|^2$ depends on the transmitted signal and the transducer, $D(\tau, f)$ represents the diffraction effect, and $\alpha(f)$ and c correspond to the attenuation and to the speed of the ultrasonic signals, respectively, in the medium investigated, said receiver stage also comprises:

(C) a stage (300) for the storage and/or display of the scatter function of the medium investigated which consists of a logarithmic amplifier (301) which is connected to the output of the stage (200) for determining the spectrum, and an arithmetic circuit (302) which enables the storage, or the display on a display device (303) of the scatter function of the medium investigated as a function of the frequency, the diffraction correction stage (205) being followed by an attenuation correction stage (206) which receives an attenuation correction signal from a memory (260).

## Patentansprüche

1. Verfahren zum Untersuchen von Medien mittels Ultraschall-Echographie durch wiederholtes Ausstrahlen von Ultraschall-Signalen mit Hilfe wenigstens eines Ultraschall-Wandlers und durch den Empfang von Ultraschall-Echos entsprechend den in ihrer Fortpflanzungsrichtung von den ausgesandten Strahlen vorgefundenen Hindernissen, wobei das Verfahren folgende Operationen umfaßt:

(a) Speicherung der Echos einer Echographiezeile;

(b) Bestimmung des Leistungsspektrums mit Korrektur der Diffraktions- und Abschwächungsauswirkung für ein Zeitfenster entsprechend einer bestimmten Fortpflanzungszeit $\tau$,

dadurch gekennzeichnet, daß das Verfahren zum Bestimmen der Frequenzabhängigkeit der Diffusionsfunktion des untersuchten Mediums U(f) = $af^b$ dient, wobei a und b Koeffizienten sind, und die Diffusionsfunktion mit dem Leistungsspektrum $S_W(\tau, f)$ der empfangenen Echos in einem Zeitfenster W entsprechend einer Fortpflanzungszeit $\tau$ durch die Gleichung

$$S_W(\tau, f) = |\,G(f)\,|^2 \cdot |\,U(f)\,|^2 \cdot D(\tau, f) \cdot e^{-2\alpha(f)c\tau}$$

verknüpft ist, worin $|\,G(f)\,|^2$ vom Emissionssignal und vom Wandler abhängig ist, $D(\tau, f)$ die Diffraktionsauswirkung darstellt und $\alpha(f)$ und c der Abschwächung bzw. der Geschwindigkeit der Ultraschall-Signale im untersuchten Medium entsprechen, und daß das Verfahren außerdem folgende Operationen umfaßt:

(c) Speicherung und/oder Darstellung der Diffusionsfunktion des untersuchten Mediums in Abhängigkeit von der Frequenz, wobei einerseits ein Signal proportional dem Quadrat der Diffusionsfunktion $|\,U(f)\,|$ in eine logarithmische Form umgewandelt und dabei vom korrigierten Leistungsspektrum ausgegangen wird, und andererseits das Signal gespeichert und/oder an einer Bildwiedergabeanordnung in logarithmischen Koordinaten dargestellt wird;

(d) Wiederholung der Operationen (b), (c) für andere Fortpflanzungszeiten auf einer bestimmten echographischen Zeile und anschließend der Operationen (a), (b), (c) für andere echographische Zeilen.

2. Anordnung zur Untersuchung von Medien mittels Ultraschall-Echographie zur Durchführung des Verfahrens nach Anspruch 1, mit wenigstens einem Ultraschall-Wandler, der einer Emissionsstufe zur Gewährleistung einer wiederholten Emission von Ultraschall-Signalen und einer Empfangsstufe zur Gewährleistung des Empfangs der Ultraschall-Signale entsprechend in ihrer Fortpflanzungsrichtung von den ausgesandten Signalen vorgefundenen Hindernissen zugeordnet ist, wobei die Empfangsstufe folgende Elemente enthält:

(A) eine Speicherstufe (100) für Echos aus einer echographischen Zeile, wobei diese Stufe aus einem Analog/Digitalwandler (101) und einem digitalen Speicher (102) besteht;

(B) eine Leistungsspektrumbestimmungsstufe (200), die aufeinanderfolgend aus einer Wählschaltung (201) zum Wählen des einer Fortpflanzungszeit $\tau$ zugeordneten Zeitfensters, einer Multiplikationsschaltung (202) zum Multiplizieren des Ausgangssignals dieser Wählschaltung mit dem der Speicherstufe (100) für Echos aus einer echographischen Zeile, einer Berechnungsschaltung (203) zum Berechnen der Fourier-Transformierten, einer Berechnungsschaltung (204) zum Berechnen des Quadratmoduls und einer Diffraktionskorrekturstufe (205) besteht,

dadurch gekennzeichnet, daß zum Bestimmen der Frequenzabhängigkeit der Diffusionsfunktion des untersuchten Mediums $U(f) = af^b$, wobei a und b Koeffizienten sind, und die Diffusionsfunktion mit dem Leistungsspektrum $S_W(\tau, f)$ der empfangenen Echos in einem Zeitfenster W entsprechend einer Fortpflanzungszeit $\tau$ durch die Gleichung

$$S_W(\tau, f) = |G(f)|^2 \cdot |U(f)|^2 \cdot D(\tau, f) \cdot e^{-2\alpha(f)c\tau}$$

verknüpft ist, worin $|G(f)|^2$ vom Emissionssignal und vom Wandler abhängig ist, $D(\tau, f)$ die Diffraktionsauswirkung darstellt, und $\alpha(f)$ und c der Abschwächung bzw. der Geschwindigkeit der Ultraschall-Signale im untersuchten Medium entsprechen, die Empfangsstufe außerdem folgende Elemente enthält:

(C) eine Speicher- und/oder Darstellungsstufe (300) zum Speichern und/oder Darstellen der Diffusionsfunktion des untersuchten Mediums, wobei diese Stufe aus einem logarithmischen Verstärker (301) in der Verbindung mit dem Ausgang der Spektrumbestimmungsstufe (200) und aus einer arithmetischen Verarbeitungsschaltung (302), die die Speicherung oder die Darstellung an einer Bildwiedergabeanordnung (303) der Diffusionsfunktion des untersuchten Mediums in Abhängigkeit von der Frequenz ermöglicht, wobei der Diffraktionskorrekturstufe (205) eine Abschwächungskorrekturstufe (206) folgt, die aus einem Speicher (260) ein Abschwächungskorrektursignal empfängt.

FIG.2

FIG.1